Europäisches Patentamt

European Patent Office

Office européen des brevets

(19)

(11) Publication number: **0 206 392**
**B1**

## EUROPEAN PATENT SPECIFICATION

(45) Date of publication of the patent specification:
**12.09.90**

(51) Int. Cl.⁵: **G11B 23/04**
**// G11B7/24**

(21) Application number: **86200953.7**

(22) Date of filing: **30.05.86**

(54) Cassette containing a recording carrier in tape form.

(30) Priority: **12.06.85 NL 8501698**

(43) Date of publication of application:
**30.12.86 Bulletin 86/52**

(45) Publication of the grant of the patent:
**12.09.90 Bulletin 90/37**

(84) Designated Contracting States:
**DE FR GB NL**

(56) References cited:
**EP-A- 0 026 550**
**DE-A- 2 419 657**
**US-A- 3 553 391**
**US-A- 3 569 637**
**US-A- 3 692 956**

**PATENTS ABSTRACTS OF JAPAN, vol. 6,**
**no. 112 (P-124)[990], 23rd June 1982; & JP - A - 57 40 764**
**PATENTS ABSTRACTS OF JAPAN, vol. 6,**
**no. 145(P-132)[1023], 4th August 1982; & JP - A - 57 66 575**
**PATENTS ABSTRACTS OF JAPAN, vol. 9,**
**no. 2 (P-325)[1725], 8th January 1985; & JP - A - 59 151 346**

(73) Proprietor: **DOCdata N.V., Venrayseweg 32, NL-5928 NV Venlo(NL)**

(72) Inventor: **Beaujean, Joseph Marie Elise, Pastoorstraat 11, NL-5971 BZ Grubbenvorst(NL)**

(74) Representative: **van der Beek, George Frans, Ir. et al, Nederlandsch Octrooibureau Scheveningseweg 82 P.O. Box 29720, NL-2502 LS 's-Gravenhage(NL)**

## Description

The invention relates to a cassette containing a recording carrier in tape form, together with means for transporting the recording carrier along a member forming part of the means for reading and/or writing and/or erasing the recording carrier, which cassette is of hermetically sealed construction and is filled with a gas which does not react chemically with the surface of the tape or with the surface of the guide means, if present.

A cassette of this kind, particularly one containing an optical recording carrier in tape form, is known from Patents Abstracts of Japan, volume 6, number 112 (P124)-990, 23.6.82, relating to JP-A-5 740 764. As indicated in this publication the cassette is hermetically sealed and filled with a gas to prevent oxidation of the recording tape inside the cassette.

Although the present application relates in particular to a cassette containing an optical recording carrier in tape form, the problems described below also occur in cassettes containing magnetic recording carriers in tape form, such as audio and video cassettes.

One problem which occurs in particular in the transporting of the information carrier tape in a cassette is the fact that the tape, viewed on a microscopic scale, does not run at a monotonous speed, but moves in jerks and jumps along the aforesaid winding, so that the read or write process is impaired.

Another problem is that the tightness of the winding of the tape on the reels varies, so that there is no fixed relationship between the macroscopic position of the tape and the position of the reels, even with uniform tractive force on the tape.

The invention now seeks to indicate measures by which these disadvantages are eliminated or at least substantially reduced, and by which smooth, uniform transport of the tape can be achieved.

This aim is attained with a cassette of the type first defined above in that the gas present is under a pressure lower than 0.05 MPa and preferably lower than 0.01 MPa.

It has been found that in a cassette according to the invention the uneven movement of the tape, which may be due to the so-called stick-slip phenomena, is effectively avoided. Furthermore it has been found that the abovementioned problem of uneven tightness of windings on the reels is to a great extend overcome by using a low pressure gas inside the gas. One gas is present in the cassette, gas inclusions probably occur between the windings on a reel. By forming a vacuum in the cassette, or by bringing the gas in the cassette to a pressure lower than 0.05 MPa, and preferably lower than 0.01 MPa, the influence of theses gas inclusions is eliminated.

In one form of construction of the cassette the recording carrier tape is provided with a magnetizable recording medium, and the aforesaid member consists of at least one magnetic head mounted in the cassette, while hermetically sealing electric lead-in means connected to the head are disposed in the wall of the cassette.

In another embodiment the recording carrier tape is provided with an optical read/write recording medium and the aforesaid member is composed of an optically transparent window in the cassette wall.

The invention relates not only to a cassette containing a recording carrier in tape form, but also to a cassette which is intended to contain a recording carrier tape and then to be hermetically sealed and filled with a non-reactive gas. The scope of the protection applied for then also extends to the still empty cassette especially intended for this purpose.

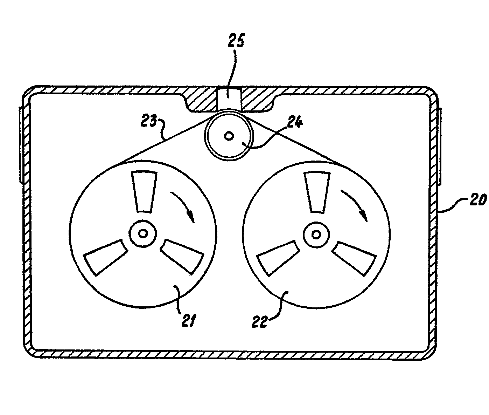

The drawing shows very schematically a section of a holder containing an optical information carrier in tape form in accordance with the invention. The holder 20 is shown in section, and therefore only the side walls through which the section is taken can be seen in the drawing. It will however be clear that the holder is also provided with top and bottom walls fastened hermetically sealingly to the closed side wall. In the holder two shafts 26 and 27 are for example fastened to the bottom plate of the cassette. The reels 21 and 22 are mounted for rotation about these shafts. The optical information carrier tape 23 runs off the reel 21 via a pressure member 24 to the other reel 22. The pressure member 24 is located in front of a translucent window 25 which is provided in the wall of the cassette 20 and is hermetically sealed therein. That part of the optical information carrier tape 23 which is located on the pressure member 24 can be seen through this window by an optical read/write head. The pressure member 24 may be in the form of a rotatably mounted wheel, or else in the form of a non-rotatable sliding member.

## Claims

Cassette containing a recording carrier in tape form, together with means for transporting the recording carrier along a member forming part of the means for reading and/or writing and/or erasing the recording carrier, which cassette is of hermetically sealed construction and is filled with a gas which does not react chemically with the surface of the tape or with the surface of the guide means, if present, characterized in that the gas present is under a pressure lower than 0.05 MPa and preferably lower than 0.01 MPa.

## Patentansprüche

Kassette, die einen bandförmigen Aufzeichnungsträger zusammen mit Mitteln enthält, um den Aufzeichnungsträger längs einem Element zu transportieren, das Teil einer Einrichtung zum Lesen und/oder Schreiben und/oder Löschen des Aufzeichnungsträgers ist, wobei die Kassette hermetisch abgedichtet aufgebaut und mit einem Gas gefüllt ist, das nicht mit der Oberfläche des Bandes oder der Oberfläche der Führungseinrichtung, so vorhanden, chemisch reagiert, dadurch gekennzeichnet, daß das vorhandene Gas unter einem Druck von weniger als 0,05 MPa und vorzugsweise weniger als 0,01 MPa steht.

## Revendications

Cassette contenant un support d'enregistrement en forme de bande, conjointement avec des moyens pour transporter le support d'enregistrement le long d'un organe faisant partie des moyens de lecture et/ou d'enregistrement et/ou d'effacement du support d'enregistrement, cette cassette étant du type à construction scellée hermétiquement et étant remplie d'un gaz qui ne réagit pas chimiquement avec la surface de la bande ou avec la surface des moyens de guidage, si ceux-ci sont présents, caractérisée en ce que le gaz présent est à une pression inférieure à 0,05 MPa et de préférence inférieure à 0,01 MPa.